# EUROPEAN PATENT APPLICATION

(11) **EP 3 758 088 A1**
(43) Date of publication of application: **30.12.2020**
(21) Application number: 19758229.9
(22) Date of filing: 21.02.2019
(51) Int. Cl.: H01M 2/10, H01M 2/20

(54) **ASSEMBLED BATTERY**

(30) Priority: 23.02.2018 JP 2018030847
(71) Applicant: KABUSHIKI KAISHA TOSHIBA, Minato-ku Tokyo 105-0023 (JP)
(72) Inventor: SHIMIZU, Norio, Kawasaki-shi, Kanagawa 212-0013 (JP); YAMAMOTO, Hirofumi, Kawasaki-shi, Kanagawa 212-0013 (JP); KASAYA, Ryousuke, Kawasaki-shi, Kanagawa 212-0013 (JP); MUTO, Takashi, Kawasaki-shi, Kanagawa 212-0013 (JP)
(74) Representative: Hoffmann Eitle
(86) International application number: PCT/JP2019/006452
(87) International publication number: WO 2019/163864

(57) **Abstract**

A battery pack can reduce improper welding of a busbar and reduce a load to the busbar. A battery pack of an embodiment includes a lower case having a rectangular box shape with a top opened, and including a bottom part, a plurality of first walls, and second walls; an upper case having a rectangular box shape with a bottom opened, and including a top part opposing the lower case; and a plurality of secondary batteries each including a top face provided with a positive-electrode terminal and a negative-electrode terminal, principal faces, a pair of lateral faces extending between the principal faces, and a bottom face, and deformable ribs.

## Description

### TECHNICAL FIELD

Embodiments of the present invention relates to a battery pack.

### BACKGROUND ART

In recent years, battery packs have been more widely used for power supply for vehicles, electronic devices, and other industrial purposes. For the purpose of increased capacity, a battery pack includes a combination of secondary battery cells, in which the positive and negative-electrode terminals of the secondary battery cells are electrically connected to each other via busbars.

### CITATION LIST

### Patent Literature

Patent Document 1: Japanese Laid-open Patent Publication Application No. 2003-68260

### SUMMARY OF INVENTION

### PROBLEM TO BE SOLVED BY THE INVENTION

The busbars may be connected to the terminals by welding. In such a case, misalignment of terminals may cause improper welding. In spite of proper welding, the busbars may receive a load and be damaged by vibrations of the battery pack during use. In view of this, an object of the present invention is to provide a battery pack that can reduce improper welding of busbars and reduce a load to the busbars.

### MEANS FOR SOLVING PROBLEM

In view of solving the above problem, according to one embodiment, a battery pack includes a lower case having a rectangular box shape with a top opened, the lower case including a bottom part, a plurality of first walls extending from the bottom part in a direction substantially orthogonal to the bottom part with given spacing from one pair of sides of the bottom part, and second walls extending from the other pair of sides of the bottom part in the direction substantially orthogonal to the bottom part; an upper case having a rectangular box shape with a bottom opened, the upper case including a top part opposing the lower case; and a plurality of secondary batteries each including a top face provided with a positive-electrode terminal and a negative-electrode terminal, a pair of principal faces extending from a pair of long sides of the top face in a direction substantially orthogonal to the top face, a pair of lateral faces extending between the principal faces, and a bottom face opposing the top face, the secondary batteries being housed between the first walls of the lower case such that the bottom faces oppose the bottom part. The lower case includes deformable ribs extending from the bottom part to the first walls. The deformable ribs are partially crushed in a direction from an open side toward the bottom part of the lower case.

### BRIEF DESCRIPTION OF DRAWINGS

FIG. 1 is a battery pack according to an embodiment;
FIG. 2 is an exploded perspective view of the battery pack of according to an embodiment;
FIG. 3 is a perspective view of a secondary battery according to an embodiment;
FIG. 4 is a perspective view of a lower case according to an embodiment;
FIG. 5 is a sectional view of the lower case according to an embodiment;
FIG. 6 is a perspective view of a deformable rib according to an embodiment;
FIG. 7 is a partial sectional view of the lower case including the deformable rib according to an embodiment;
FIG. 8 is a perspective view of an upper case according to an embodiment;
FIG. 9 is a partial sectional view of the lower case according to an embodiment;
FIG. 10 is a partial sectional view of the lower case according to an embodiment;
FIG. 11 is a partial sectional view of the lower case according to an embodiment;
FIG. 12 is a partial sectional view of the upper case according to an embodiment;
FIG. 13 is a partial sectional view of the upper case according to an embodiment;
FIG. 14 is a partial sectional view of the upper case according to an embodiment; and
FIG. 15 is a partial sectional view of the lower case according to an embodiment.

### DESCRIPTION OF EMBODIMENTS

The following will describe embodiments with reference to the accompanying drawings. In the drawings, directions (X direction, Y direction, and Z direction) are defined for the sake of convenience. The X direction, the Y direction, and the Z direction are orthogonal to one another.

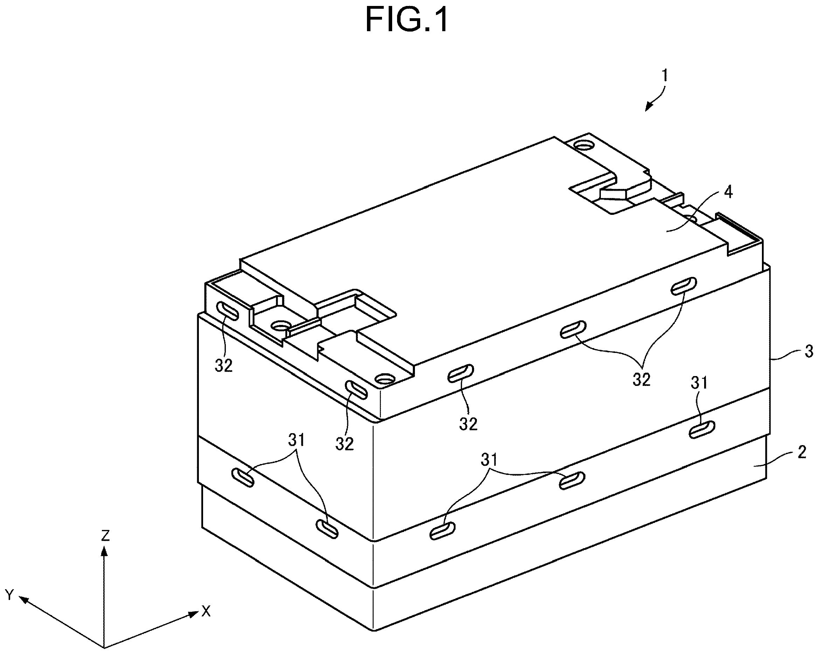

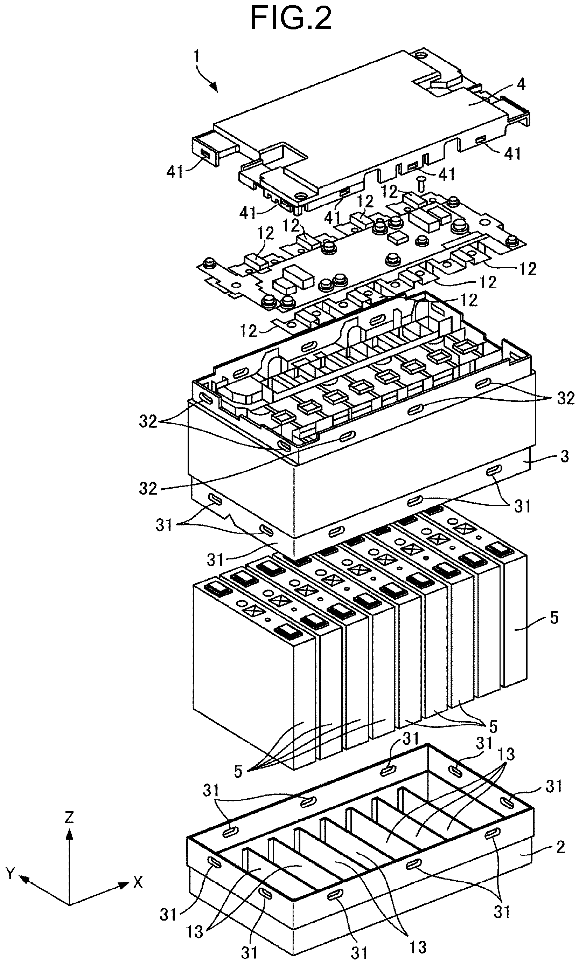

FIG. 1 is a perspective view of a battery pack 1 according to an embodiment, and FIG. 2 is an exploded perspective view of the battery pack 1 of the embodiment. The battery pack 1 includes a lower case 2 of a rectangular box-shape with a top opened, an upper case 3 of a rectangular box shape with a bottom opened, and coupled to the opened top of the lower case 2, and a lid 4 of a rectangular box shape with a bottom opened, covering the top part of the upper case 3.

The components and parts of the lower case 2, the upper case 3, and the lid 4 contain a synthetic resin material having insulting properties (modified polyphenylene ether (PPE) or perfluoroalkoxy alkanes, tetrafluoroethylene-perfluoroalkyl vinyl ether copolymer (PFA), for example). The synthetic resin can be a thermoplastic resin; examples thereof include olefin resins such as polyethylene (PE), polypropylene (PP), and polymethylpentene (PMP); polyester resins such as polyethylene terephthalate (PET), polybutylene terephthalate (PBT), and polyethylene naphthalate (PEN); polyamide resins such as a polyoxymethylene (POM) resin, polyamide 6 (PA6), polyamide 66 (PA66), and polyamide 12 (PA12); crystalline resins such as a polyphenylene sulfide (PPS) resin and a liquid crystal polymer (LCP) resin and alloy resins thereof; and amorphous resins such as polystyrene (PS), polycarbonate (PC), polycarbonate/acrylonitrile-butadiene-styrene (PC/ABS), ABS, acrylonitrile-styrene (AS), modified polyphenylene ether (PPE), polyethersulfone (PES), polyetherimide (PEI), and polysulfone (PSF) and alloy resins thereof.

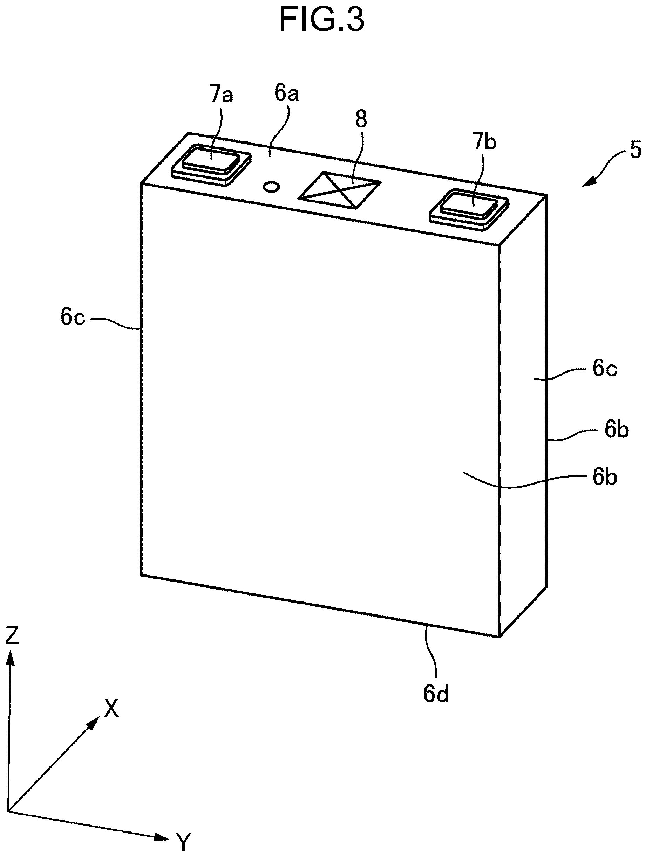

A casing includes the lower case 2, the upper case 3, and the lid 4, and houses inside a plurality of secondary battery cells 5 illustrated in FIG. 3 along the thickness of the secondary battery cells 5 (in X direction). Each secondary battery cell 5 represents a nonaqueous electrolyte secondary battery such as a lithium-ion battery, is formed of aluminum or an aluminum alloy, and has a flat or substantially rectangular parallelepiped shape, for example. The secondary battery cell 5 includes a top face 6a, a pair of principal faces 6b extending from a pair of long sides of the top face 6a in a direction substantially orthogonal to the top face (in Z direction), a pair of lateral faces 6c extending between the principal faces 6b, and a bottom face 6d opposing the top face 6a.

The top face 6a of the secondary battery cell 5 is provided with two types of terminals, i.e., a positive electrode 7a and a negative electrode 7b, at both ends in a longitudinal direction Y. The positive-electrode terminal 7a and the negative-electrode terminal 7b are electrically connected to an electrode (not illustrated) housed inside the secondary battery cell 5. The secondary battery cell 5 may be provided with a gas exhaust valve 8 that discharges gas if occurs inside.

FIG. 2 illustrates nine secondary battery cells 5 connected in series as an example. The secondary battery cells 5 are arranged such that the principal faces 10 oppose each other, to form a battery cell group. A part of the upper case 3, corresponding to the positive-electrode terminal 7a and the negative-electrode terminal 7b of the secondary battery cell 5, is opened, and the positive-electrode terminal 7a and the negative-electrode terminal 7b are electrically connected to each other via a busbar 12.

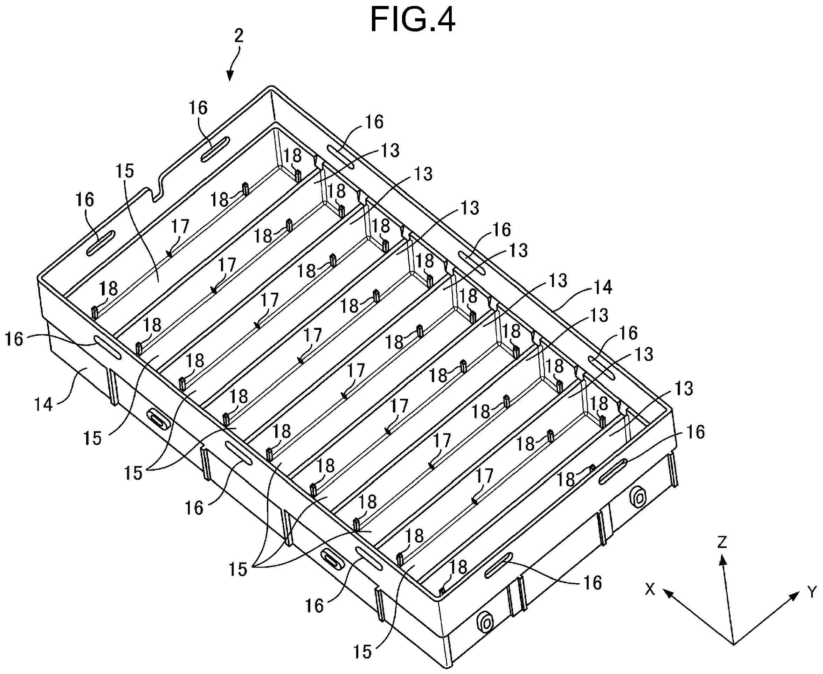

The following describes part of the secondary battery cells 5 housed in the lower case 2 with reference to FIG. 3 and a perspective view of the lower case 2 in FIG. 4.

The lower case 2 has a plurality of first walls 13. The first walls 13 oppose the principal faces 6b of the adjacent secondary battery cells 5 and spaced apart from each other with first given spacing substantially equal to the X-directional thickness of the secondary battery cell 5. The lower case 2 also has a pair of second walls 14 and a bottom part 15. The second walls 14 oppose the lateral faces 6c of the secondary battery cell 5 and are spaced apart from each other with second given spacing substantially equal to the Y-directional width of the secondary battery cell 5. The bottom part 15 opposes the bottom face 6d of the secondary battery cell 5. The lower case 2 has an outer circumferential wall provided with fixing holes 16 into which snap fits 31 formed on the upper case 3 are fitted, as described below.

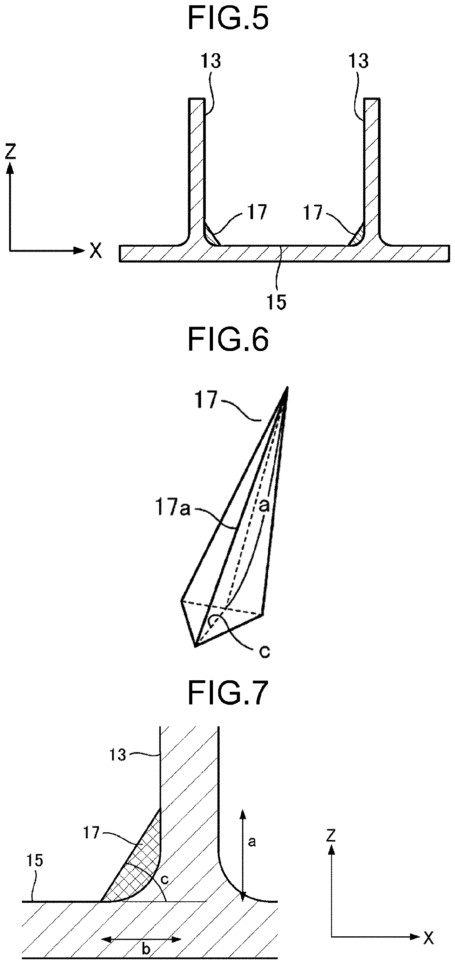

The following describes deformable ribs 17 and positioning ribs 18 of the lower case 2 with reference to FIG. 5 to FIG. 7. FIG. 5 is an XZ sectional view of the lower case 2 provided with the deformable ribs 17, FIG. 6 is a perspective view of a deformable rib 17, and FIG. 7 is an enlarged view of FIG. 5.

As illustrated in FIG. 5, the deformable ribs 17 extend from the bottom part 15 to the first walls 13 of the lower case 2. The deformable ribs 17 are formed of a synthetic resin material similar to that of the lower case 2 and has a form of triangular pyramid with the first wall 13 as one lateral face and the bottom part 15 as a bottom face, for example, as illustrated in FIG. 6. As illustrated in FIG. 7, the angle (the letter c in FIG. 6) between the bottom part 15 and a ridgeline 17a of the triangular pyramid of the deformable rib 17 is preferably set to 45 degrees or more. The length indicated by the letter a in FIG. 6, that is, the distance from the intersection between the ridgeline 17a of the deformable rib 17 and the first wall 13 to the bottom is preferably set to 2 to 3 mm. The length indicated by the letter b, that is, the distance from the intersection between the ridgeline 17a of the deformable rib 17 and the bottom part 15 to the first wall 13 is preferably set to 0.5 to 1.5 mm. However, an appropriate film thickness varies depending on the design of the secondary battery cell 5 or the cases, therefore, this is not limiting.

The shape of the deformable ribs 17 is not limited to the triangular pyramid and the deformable ribs 17 may be optionally shaped as long as the distance from the first wall 13 to the end face of the deformable rib 17 gradually increases in a direction opposite the Z-axial direction (toward the bottom part 15). Meanwhile, the positioning ribs 18 each have a face parallel to the principal faces 10 or the lateral faces 6c of an exterior container 6.

FIG. 6 is a sectional view of part of the bottom part 15 of the lower case 2. Herein, the deformable rib 17 is drawn as a triangle while the positioning rib 18 is drawn as a rectangle. As illustrated in FIG. 6, the positioning ribs 18 are more away from the central part of the secondary battery cells 5 in the Y-axial direction than the deformable ribs 17. As illustrated in FIG. 7, the deformable ribs 17 are preferably lower in height than the positioning ribs 18 in the Z-axial direction. Thus, in inserting the secondary battery cell 5 into the lower case 2, the secondary battery cell 5 first comes into contact with the positioning ribs 18 and then with the deformable ribs 17. That is, the secondary battery cell is corrected in position in the XY plane, and then positioned in the Z direction by the deformable ribs 17. The secondary battery cell contacts with the ribs in this order, which makes it possible to decrease an amount of deformation of the deformable ribs 17 to a minimum, and enables the deformable ribs 17 to appropriately apply a repulsive force to the secondary battery cell 5.

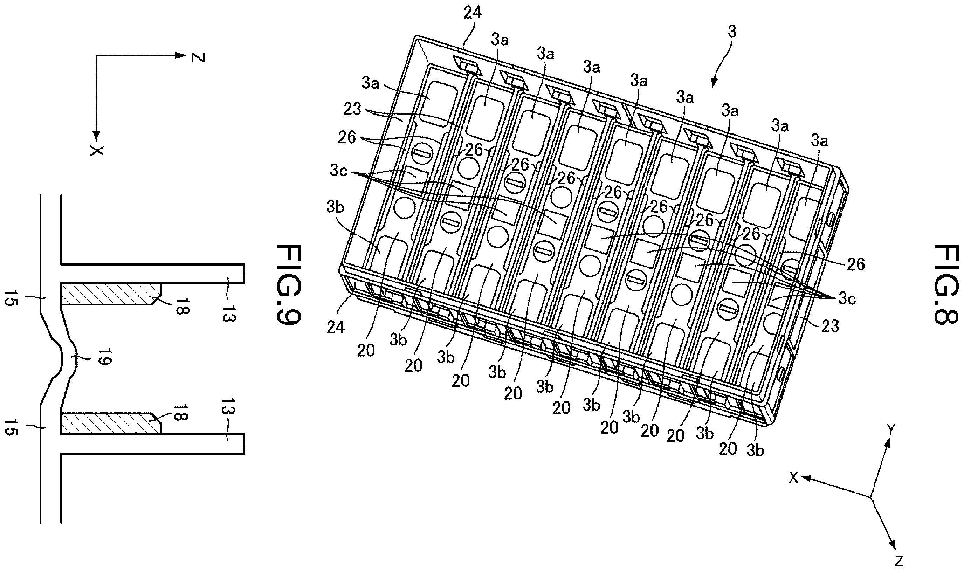

The upper case 3 is described next with reference to FIG. 2 and FIG. 8. The upper case 3 has a rectangular box shape with a bottom opened and includes a top part 20, a plurality of third walls 23, and fourth walls 24. The third walls 23 extend with given spacing from one pair of sides of the top part 20 in a direction substantially orthogonal to the top part. The fourth walls 24 extend from the other side pair of the bottom part in the direction substantially orthogonal to the bottom part. The top part 20 opposes the top of the secondary battery cell 5. As described above, the part of the upper case 3, corresponding to the positive-electrode terminal 7a and the negative-electrode terminal 7b of the secondary battery cell 5, is provided with openings 3a and 3b. When the secondary battery cells 5 are housed and assembled in the casing, the positive-electrode terminal 7a and the negative-electrode terminal 7b of each secondary battery cell 5 pass through the openings 3a and 3b, respectively, and are electrically connected to each other through the busbar 12 set on the face of the upper case 3 not opposing the top face 6a of the secondary battery cell 5. The upper case 3 is further provided with a gas exhaust opening 3c at the part corresponding to the gas exhaust valve 8 of the secondary battery cell 5. The bottom part of the outer circumferential wall of the upper case 3 is provided with the snap fits 31 which fit into the fixing holes 16 of the lower case 2 to couple and fix the lower case 2 and the upper case 3 together. The top part of the outer circumferential wall of the upper case 3 is provided with fixing holes 32.

As illustrated in FIG. 2, the lid 4 is also provided with snap fits 41 on the outer circumference. The snap fits 41 fit into the fixing holes of the upper case 3, to couple and fix the lid 4 and the upper case 3 together. The battery pack 1 includes a board 20 that monitors and controls the secondary battery cells 5, between the lid 4 and the upper case 3, for example.

The battery pack 1 as above is assembled by the following procedure.

First, the battery cell 5 is inserted into a space defined by the first walls 13, the second walls 14, and the bottom part 15 of the lower case 2. Next, the upper case 3 is coupled to the lower case 2 so that the positive-electrode terminal 7a and the negative-electrode terminal 7b of the secondary battery cell 5 are inserted through the opening 3a and the opening 3b of the upper case 3, respectively. The busbar 12 is then set on the face of the upper case 3 not opposing the lower case 2, and the terminal connecting faces of the busbar 12 are in contact with the positive-electrode terminal 7a and the negative-electrode terminal 7b and connected together by welding, for example.

In assembling the battery pack 1 by such a procedure, owing to the structure of the present embodiment, the bottom face 6d or the principal faces 10 of the secondary battery cell 5 come(s) into contact with the positioning ribs 18 of the lower case 2. The positioning ribs 18 differ from the deformable ribs 17 in having the face parallel to the principal faces 10 or the lateral faces 6c of the exterior container 6. Thus, the insertion of the secondary battery cell 5 into the lower case 2 does not cause deformation of the positioning ribs 18. Thereby, the secondary battery cell 5 is inserted into the lower case 2 in contact with the positioning ribs 18, whereby the secondary battery cell 5 is accurately corrected in position in the X-axial direction.

Next, the secondary battery cell 5 comes into contact with the deformable ribs 17 lower in position than the positioning ribs 18 in the Z-axial direction. The deformable ribs 17 differ from the positioning ribs 18 in having the face not parallel to the principal faces 10 or the lateral faces of the exterior container 6. The deformable ribs 17 have a triangular pyramid shape with the top part 20 of the upper case 3 as a bottom face, for example. The shape of the deformable ribs 17 is not limited to the triangular pyramid, and the deformable ribs may be optionally shaped as long as the distance from the third wall 23 to the end face of the deformable rib 17 gradually increases in the Z-axial direction.

The lower case 2 includes such deformable ribs 17 and positioning ribs 18, so that when inserting the secondary battery cell 5 into the lower case 2, the secondary battery cell 5 comes into contact with the face not parallel to the principal faces 10 or the lateral faces 6c of the exterior container 6. This makes it easier for the deformable ribs 17 to receive the force inserting the secondary battery cell 5, deforming their contact points. Thereby, the deformable ribs 17 are crushed in the direction from the open side toward the bottom of the lower case 2. In the case of the deformable rib 17 with the triangular pyramid shape as above, the secondary battery cell 5 comes into contact with one side of the triangular pyramid, therefore, the deformable rib 17 is more easily deformable. In this process, the deformable rib 17, while deforming, applies a repulsive force to the secondary battery cell 5 toward the lower case 2 (downward in the Z-axial direction).

In such a state, the upper case 3 is coupled to the lower case 2 with the snap fits 31, for example. The deformable ribs 17 then work to press the secondary battery cell 5 to the upper case 3 and press the top face 6a against the upper case 3. Thus, the positive-electrode terminal 7a and the negative-electrode terminal 7b are aligned in the Z-axial direction. In addition, the positioning ribs 18 serve to fix the secondary battery cell 5 in an accurate position in the XY plane, so that the positive-electrode terminal 7a and the negative-electrode terminal 7b can be inserted through the openings 3a and 3b of the upper case 3, respectively.

Thus, the terminal connecting faces of the busbar 12 are prevented from being misaligned and can contact with and be accurately welded to the positive-electrode terminal 7a and the negative-electrode terminal 7b.

The following describes a first modification with reference to FIG. 9.

FIG. 9 is an XZ sectional view of a housing of the secondary battery cell 5 surrounded by the first walls 13, the second walls 14, and the bottom part 15 of the lower case 2. The first modification differs from the embodiment in that the lower case 2 includes a protrusion 19 in place of the deformable ribs 17.

As shown in FIG. 9, the bottom of the lower case 2 is partially deformed in a direction opposite to the secondary battery cell 5. The protrusion 19 may extend linearly or in a dot form in the Y-axial direction.

When inserted into the lower case 2 provided with such a protrusion 19, the bottom face 6d of the secondary battery cell 5 comes into contact with the protrusion 19. The protrusion 19 is preferably elastic. When inserted into the lower case 2, the bottom face 6d of the secondary battery cell 5 comes into contact with the protrusion 19 and then receives a repulsive force toward the upper case 3 (in the Z-axial direction).

In such a state, the upper case 3 is coupled to the lower case 2 with the snap fits 31, for example. The protrusion 19 then presses the secondary battery cell 5 toward the upper case 3 and presses the top face 6a against the upper case 3. Thereby, the positive-electrode terminal 7a and the negative-electrode terminal 7b are aligned in the Z-axial direction. In addition, the positioning ribs 18 work to fix the secondary battery cell 5 in an accurate position in the XY plane, so that the positive-electrode terminal 7a and the negative-electrode terminal 7b can be inserted through the openings 3a and 3b in the upper case 3, respectively.

Thus, the terminal connecting faces of the busbar 12 are prevented from being misaligned, and can contact with the positive-electrode terminal 7a and the negative-electrode terminal 7b and be correctly welded thereto.

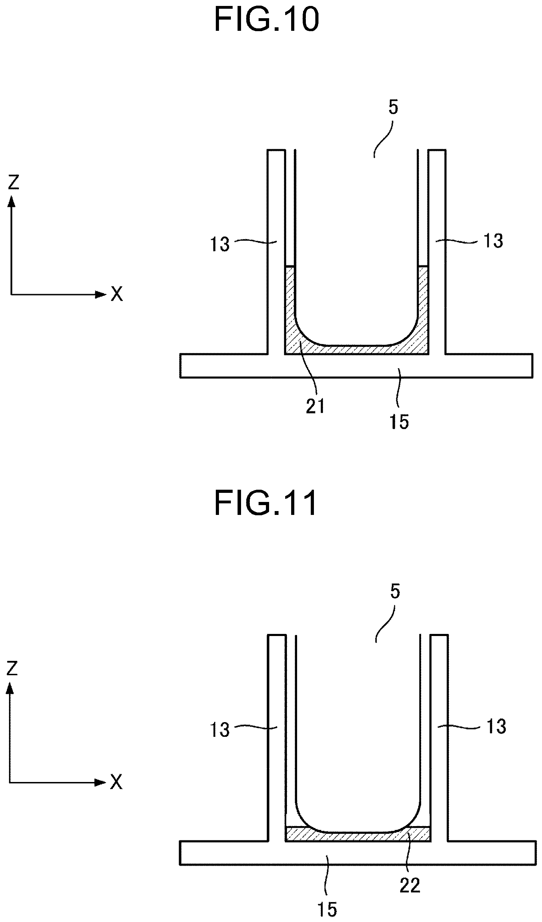

The following describes a second modification with reference to FIG. 10 to FIG. 12.

In the second modification, the lower case 2 includes any of an elastic layer 21, an adhesive 22, and the protrusion 19.

First, the elastic layer 21 is described with reference to FIG. 10. FIG. 10 is an XZ sectional view of a housing of the secondary battery cell 5 surrounded by the first walls 13, the second walls 14, and the bottom part 15 of the lower case 2. The elastic layer 21 is formed in the part surrounded by the first walls 13, the second walls 14, and the bottom part 15. The elastic layer 21 contacts with the principal faces 6b or the lateral faces 6c of the exterior container 6 of the battery cell 5 to support the secondary battery cell 5.

The elastic layer 21 generates an elastic force that presses the secondary battery cell 5. The elastic layer 21 formed on the bottom part 15 thus exerts a force on the secondary battery cell 5 in a direction toward the upper case 3 (Z-axial direction). As illustrated in FIG. 10, the elastic layer 21 may extend along the first walls 13. The elastic layer 21 is made of a foaming synthetic resin material (a foaming material such as foaming urethane). The elastic layer 21 is porous containing air bubbles, by way of an example. The elastic layer 21 is formed of a foaming synthetic resin material as an example. To form such an elastic layer 21, the foaming synthetic material is applied to the lower case 2 with a spray nozzle, for example, and subjected to heat. Thereby, the foaming synthetic resin material foams to gain elasticity, and the elastic layer 21 made of elastic synthetic resin material is formed. It is thus possible to easily obtain the elastic layer 21 that supports the secondary battery cell 5, as an example.

The adhesive 22 is now described with reference to FIG. 11. FIG. 11 is an XZ sectional view of the housing of the secondary battery cell 5 surrounded by the first walls 13, the second walls 14, and the bottom part 15 of the lower case 2. As illustrated in FIG. 11, the adhesive 22 lies on the bottom part 15 of the lower case 2. Thus, the adhesive 22 applies a repulsive force to the secondary battery cell 5 in the direction toward the upper case 3 (Z-axial direction). The adhesive 22 may have a film thickness of preferably 0.1 mm to 0.3 mm. However, an appropriate film thickness varies depending on the design of the secondary battery cell 5 or the cases, therefore, this is not limiting.

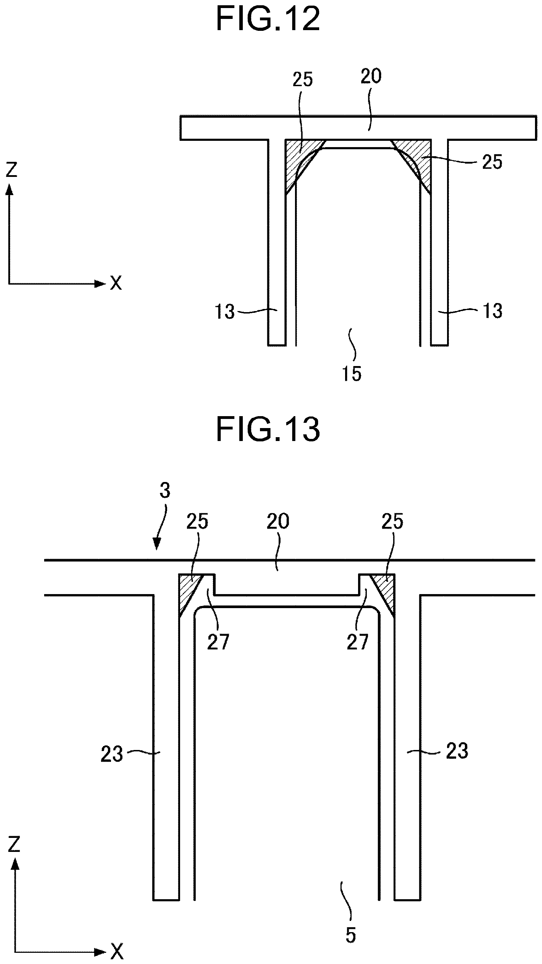

The battery pack according to the modification includes an upper case 3 illustrated in FIG. 12. FIG. 12 is an XZ sectional view of the housing of the secondary battery cell 5 surrounded by the third walls 23, the fourth walls 24, and the top part 20. The upper case 3 includes deformable ribs 25 extending from the third wall 23 to the top part 20. The deformable ribs 25 are formed of a synthetic resin material similar to that of the upper case 3 and have a triangular pyramid shape with the third wall 23 as one lateral face and the top part 20 as one lateral face, for example. The angle between the top part 20 and one side of the triangular pyramid connecting the top part 20 and the third wall 23 is preferably set to 45 degrees or more. The shape of the deformable ribs 25 is not limited to the triangular pyramid and may be optionally shaped as long as they include a face not parallel to the principal faces 10 or the lateral faces 6c of the exterior container 6 of the secondary battery cell 5.

Owing to such a configuration and structure, in assembling the battery pack by the procedure illustrated in the embodiment, the bottom face 6d of the secondary battery cell 5, while inserted into the lower case 2, receives a repulsive force toward the upper case 3 (in the Z-axial direction) from the elastic layer 21, the adhesive 22, or the protrusion 19 of the lower case 2. In coupling the upper case 3 to the lower case 2 with the snap fits 31 in such a state, for example, the secondary battery cell 5 is pressed by the elastic layer 21, the adhesive 22, or the protrusion 19 toward the upper case 3, and the top face 6a is pressed against the upper case 3. Thereby, the positive-electrode terminal 7a and the negative-electrode terminal 7b are aligned in the Z-axial direction. In addition, the deformable ribs 25 of the upper case 3 come into contact with the top face 6a of the secondary battery cell 5, and are deformed, thereby enabling positional correction in the XY plane.

Consequently, the positive-electrode terminal 7a and the negative-electrode terminal 7b can be inserted through the openings 3a and 3b in the upper case 3, respectively.

Thereby, the terminal connecting faces of the busbar 12 are prevented from being misaligned and can contact with the positive-electrode terminal 7a and the negative-electrode terminal 7b and be correctly welded thereto.

The secondary battery cell 5 is vertically secured by the elastic layer 21, the adhesive 22, or the protrusion 19 of the lower case 2 and the deformable ribs 25 of the upper case 3. That is, the secondary battery cell 5 can be more stably secured inside the battery pack.

In addition to the features as above, the secondary battery cell 5 can be more stably secured inside the battery pack by applying an adhesive to the top face 6a of the upper case 3.

A third modification is now described with reference to FIG. 8. The third modification has the same structure as the second modification except for part of the upper case 3.

In the third modification, the upper case 3 are provided with channels 26 at part of the top part 20 adjacent to the third walls 23. The channels 26 extend in the Y-axial direction along the third walls 23. As illustrated in FIG. 8, it is preferable to provide the channels 26 at parts located between the openings 3a and 3b in the top part 20 of the upper case 3. However, this is not limiting. The depth of the channels 26 is preferably set to 0.1 mm to 0.3 mm; however, this is not limiting.

If the upper case 3 is coated with an adhesive for fixation of the secondary battery cell 5, an excessive adhesive 22 flows into the channels 26 when the secondary battery cell 5 contacts with the top part 20 of the upper case 3 for assembly of the battery pack. The excessive adhesive 22 is accumulated and hardened between the top part 20 of the upper case 3 and the secondary battery cell 5. This can reduce the possibility of misaligning the secondary battery cell 5 in the Z-axial direction. It is thus possible to lower the possibility of misaligning the positive-electrode terminal 7a and the negative-electrode terminal 7b of the secondary battery cell 5, and lower the possibility of improperly welding the busbar to the terminals.

Another modification is described with reference to FIG. 13. FIG. 13 is a partial enlarged view of an XZ section of the upper case 3. The present modification has the same structure as the second modification except for part of the upper case 3.

In this modification, the deformable ribs 25 are located in second channels 27 in the top part 20 of the upper case 3. The second channels 27 extend adjacent to the third walls 23. The top face 6a of the secondary battery cell 5, when housed in the upper case 3, abuts on the top part 20 of the upper case 3 with no second channels 27 formed. In other words, the top face 6a abuts on a protrusion defined between the second channels 27 by the second channels 27 of the top part 20.

In such a structure, when the secondary battery cell 5 is placed in the upper case 3 for assembly of the battery pack, the deformable ribs 25 are deformed by the secondary battery cell 5. In this process, the deformable ribs 25 deform inside the second channels 27. By the deformed ribs 25, thus, the secondary battery cell 5 can be accurately corrected in position in the XY plane with no change in the Z-axial height of the secondary battery cell 5.

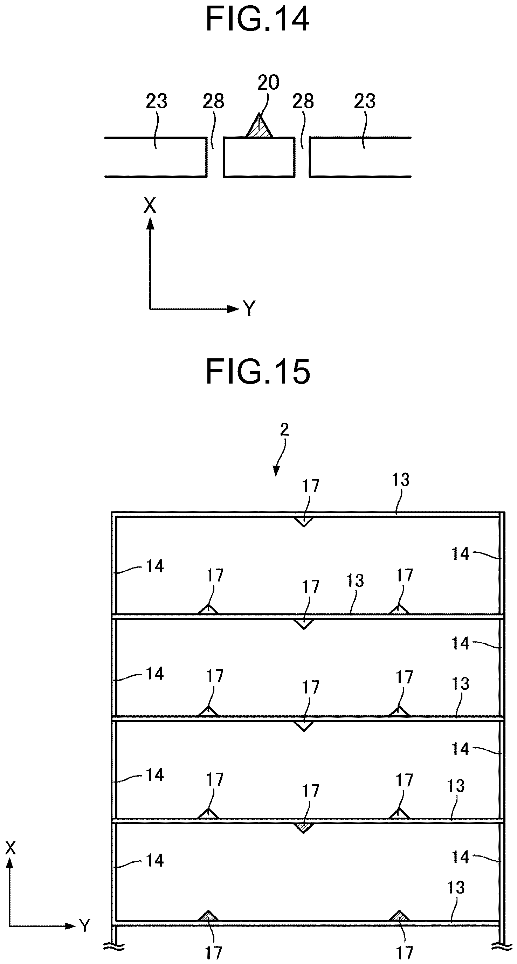

A next modification is described with reference to FIG. 14. FIG. 14 is an XY sectional view of the third walls 23 and the deformable rib 25 of the upper case 3. This modification has the same structure as the second modification except for part of the upper case 3.

In this modification, the third walls 23 of the upper case 3 are provided with slits 28 at a part adjacent to the deformable rib 25. The deformable rib 25 is preferably interposed between the adjacent slits 28.

In such a structure, when the secondary battery cell 5 is placed in the upper case 3 for assembly of the battery pack, the deformable ribs 25 are deformed by the secondary battery cell 5. In this process, due to the slits 28, the deformable ribs 25 fall down away from the secondary battery cell 5 (in X-axial direction, for example) together with the third walls 23 including the deformable ribs 25. This can eliminate misalignment of the secondary battery cell 5 or the upper case 3. The slits 28 may pass through the third walls 23 to be able to eliminate larger misalignment. However, the slits 28 may not pass therethrough.

Further, FIG. 15 is a sectional view of part of the lower case 2 and deformable ribs 17. FIG. 15 illustrates the lower case 2 of the battery pack when installed, with upper faces in upper position and lower faces in lower position. As illustrated in FIG. 15, the deformable ribs 17 are located asymmetric to the wall surfaces. The lower faces are provided with a larger number of deformable ribs 17. By such a structure, the lower faces receiving a larger load are provided with a larger number of deformable ribs 17, which can more stably secure the secondary battery cells 5.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATIONS OF LETTERS OR NUMERALS

- 1: BATTERY PACK
- 2: LOWER CASE
- 3: UPPER CASE
- 3c: GAS EXHAUST OPENING
- 4: LID
- 5: SECONDARY BATTERY CELL
- 6: EXTERIOR CONTAINER
- 6a: TOP FACE
- 6b: PRINCIPAL FACE
- 6c: LATERAL FACE
- 6d: BOTTOM FACE
- 7a: POSITIVE-ELECTRODE TERMINAL
- 7b: NEGATIVE-ELECTRODE TERMINAL
- 10: PRINCIPAL FACE
- 12: BUSBAR
- 13: FIRST WALL
- 14: SECOND WALL
- 15: BOTTOM PART
- 16: FIXING HOLE
- 17: DEFORMABLE RIB
- 17a: RIDGELINE
- 18: RIB
- 19: PROTRUSION
- 20: BOARD
- 20: TOP FACE
- 21: ELASTIC LAYER
- 22: ADHESIVE
- 23: THIRD WALL
- 24: FOURTH WALL
- 25: DEFORMABLE RIB
- 26: CHANNEL
- 27: SECOND CHANNEL
- 28: SLIT

## Claims

1. A battery pack comprising:
a lower case having a rectangular box shape with a top opened, the lower case including:
a bottom part,
a plurality of first walls extending from the bottom part in a direction substantially orthogonal to the bottom part with given spacing from one pair of sides of the bottom part, and
second walls extending from the other pair of sides of the bottom part in the direction substantially orthogonal to the bottom part;
an upper case having a rectangular box shape with a bottom opened, the upper case including a top part opposing the lower case; and
a plurality of secondary batteries each including:
a top face provided with a positive-electrode terminal and a negative-electrode terminal,
a pair of principal faces extending from a pair of long sides of the top face in a direction substantially orthogonal to the top face,
a pair of lateral faces extending between the principal faces, and
a bottom face opposing the top face, the secondary batteries being housed between the first walls of the lower case such that the bottom faces oppose the bottom part, wherein
the lower case comprises deformable ribs extending from the bottom part to the first walls, the deformable ribs being partially crushed in a direction from an open side toward the bottom part of the lower case.

2. A battery pack comprising:
a lower case having a rectangular box shape with a top opened, the lower case including
a bottom part,
a plurality of first walls extending from the bottom part in a direction substantially orthogonal to the bottom part with given spacing from one pair of sides of the bottom part, and
second walls extending from the other pair of sides of the bottom part in the direction substantially orthogonal to the bottom part;
an upper case having a rectangular box shape with a bottom opened, the upper case including a top part opposing the lower case; and
a plurality of secondary batteries each including
a top face provided with a positive-electrode terminal and a negative-electrode terminal,
a pair of principal faces extending from a pair of long sides of the top face in a direction substantially orthogonal to the top face,
a pair of lateral faces extending between the principal faces, and
a bottom face opposing the top face, the secondary batteries being housed between the first walls of the lower case such that the bottom faces oppose the bottom part, wherein
the lower case comprises positioning ribs extending from the bottom part to the first walls or the second walls.

3. A battery pack comprising:
a lower case having a rectangular box shape with a top opened, the lower case including
a bottom part,
a plurality of first walls extending from the bottom part in a direction substantially orthogonal to the bottom part with given spacing from one pair of sides of the bottom part, and
second walls extending from the other pair of sides of the bottom part in the direction substantially orthogonal to the bottom part;
an upper case having a rectangular box shape with a bottom opened, the upper case including a top part opposing the lower case; and
a plurality of secondary batteries each including
a top face provided with a positive-electrode terminal and a negative-electrode terminal,
a pair of principal faces extending from a pair of long sides of the top face in a direction substantially orthogonal to the top face,
a pair of lateral faces extending between the principal faces, and
a bottom face opposing the top face, the secondary batteries being housed between the first walls of the lower case such that the bottom faces oppose the bottom part, wherein
the lower case comprises:
deformable ribs that extend from the bottom part to the first walls and are partially crushed in a direction from an open side toward the bottom part of the lower case, and
positioning ribs that extend from the bottom part to the first walls or the second walls and are located further away from a central part of the secondary battery than the deformable ribs.

4. The battery pack according to any one of claims 1 to 3, wherein
the lower case further comprises a protrusion in the bottom part.

5. The battery pack according to any one of claims 1 to 4, further comprising
a busbar being set on the top part of the upper case not opposing the top face of the secondary battery, the busbar that connects the positive-electrode terminal or the negative-electrode terminal.

6. A battery pack comprising:
a lower case having a rectangular box shape with a top opened, the lower case including
a bottom part,
a plurality of first walls extending from the bottom part in a direction substantially orthogonal to the bottom part with given spacing from one pair of sides of the bottom part, and
second walls extending from the other pair of sides of the bottom part in the direction substantially orthogonal to the bottom part;
an upper case having a rectangular box shape with a bottom opened, the upper case including:
a top part opposing the lower case,
a plurality of third walls extending from the top part in a direction substantially orthogonal to the top part with given spacing from one pair of sides of the top part, and
fourth walls extending from the other pair of sides of the top part in the direction substantially orthogonal to the top part; and
a plurality of secondary batteries each including
a top face provided with a positive-electrode terminal and a negative-electrode terminal,
a pair of principal faces extending from a pair of long sides of the top face in a direction substantially orthogonal to the top face,
a pair of lateral faces extending between the principal faces, and
a bottom face opposing the top face, the secondary batteries being housed between the first walls of the lower case such that the bottom faces oppose the bottom part between the first walls of the lower case and the top faces oppose the top part between the third walls of the upper case, wherein
the upper case comprises deformable ribs that extend from the top part to the third walls, and is partially crushed in a direction from an open side toward the top part of the upper case, and
the lower case comprises positioning ribs extending from the bottom part to the first walls or the second walls.

7. The battery pack according to claim 6, wherein
the lower case comprises an elastic layer on the bottom part.

8. The battery pack according to claim 7, wherein
the elastic layer contains a foaming synthetic resin material.

9. The battery pack according to any one of claims 6 to 8, wherein
part of the top part of the upper case adjacent to the third walls are provided with a channel in the direction from an open side toward the top part of the upper case, and
the deformable ribs are located in the channel.

10. The battery pack according to any one of claims 6 to 9, further comprising
a busbar being set on the top part of the upper case not opposing the top face of the secondary battery, the busbar that connects the positive-electrode terminal or the negative-electrode terminal.
